# EUROPÄISCHE PATENTSCHRIFT

(11) **EP 3 811 434 B1**
(45) Veröffentlichungstag und Bekanntmachung des Hinweises auf die Patenterteilung: **13.03.2024**
(21) Anmeldenummer: 19739866.2
(22) Anmeldetag: 13.06.2019
(51) Int. Cl.: H01M 50/209, H01M 50/224, H01M 50/262, H01M 50/276

(54) **GEHÄUSE MIT EINER QUADERARTIGEN FORM**
CUBOID-SHAPED HOUSING
BOÎTIER DE FORME CUBOÏDE

(30) Priorität: 22.08.2018 DE 102018120466
(43) Veröffentlichungstag der Anmeldung: 28.04.2021
(73) Patentinhaber: GEDIA Gebrüder Dingerkus GmbH, 57439 Attendorn (DE)
(72) Erfinder: BÖHMER, Andreas, 57368 Lennestadt (DE)
(74) Vertreter: Köchling, Conrad-Joachim
(86) Internationale Anmeldenummer: PCT/DE2019/100544
(87) Internationale Veröffentlichungsnummer: WO 2020/038516

(56) Entgegenhaltungen:
- DE-A1-102016 209 853
- FR-A1- 2 961 443
- JP-A- 2013 133 044
- US-A1- 2012 247 107

## Beschreibung

Die Erfindung betrifft ein Gehäuse mit einer quaderartigen Form zur Aufnahme einer Vielzahl von quaderförmigen Akkumulatoren, die als Energiequelle für den Fahrantrieb von Kraftfahrzeugen, insbesondere Automobilen, bestimmt sind, wobei das Gehäuse eine Bodenwandung, damit verbundene umlaufende erste und zweite Seitenwandungen und einen mit den freien Enden der Seitenwandungen lösbar verbundenen Deckel aufweist, wobei das Gehäuse ein aus einer Blechtafel abgekantetes Blechbauteil ist, wobei die Seitenwandungen gleichgerichtet von der Bodenwandung rechtwinklig abgekantet sind und deren freie Enden rechtwinklig nach außen, vom Gehäuseinneren weggerichtet abgekantet sind.

Ein solches Gehäuse ist beispielsweise aus der DE 10 2016 209 853 A1 bekannt.

Ähnliche Blechgehäuse sind auch aus der FR 2961443 A1, der US 2012/247107 A1 und der JP 2013133044 A bekannt.

Die Gehäuse weisen eine quaderförmige, schalenartige Form auf und sind vorzugsweise mit einem Deckel dicht verschlossen. In dem Gehäuse sind Akkumulatoren als Energiequelle für den Fahrantrieb angeordnet, die vor äußeren Einflüssen, wie beispielsweise Flüssigkeit und Schmutz aber auch vor einwirkenden Kräften, die bei einem Crash auf das Gehäuse einwirken, geschützt werden müssen. Aus diesem Grunde sind besonders hohe Anforderungen an die Stabilität und die Dichtigkeit des Gehäuses gestellt. Außerdem ist es wünschenswert, die Wandungen des quaderartigen Gehäuses möglichst rechtwinklig zueinander anzuordnen und die Eck- und Kantenradien besonders gering zu gestalten, um die in der Regel quaderförmigen Akkumulatoren möglichst Platzsparend in dem Gehäuse anzuordnen.

Bekannt sind beispielsweise tiefgezogene Gehäuse, Gehäuse aus Aluminiumdruckguss oder gebaute Gehäuse, die aus Profilen und Blechen zusammengesetzt sind.

Ein Nachteil von tiefgezogenen Gehäusen und von Druckgussgehäusen sind die erforderlichen Entformungsschrägen, die durch die Fertigungseinrichtung bei den entsprechenden Herstellungsverfahren vorgegeben sind. Dadurch ist eine optimale und platzsparende Anordnung der Akkumulatoren in dem Gehäuse nicht möglich.

Ein Nachteil von gebauten Gehäusen liegt darin, dass diese aus einer Vielzahl von Einzelkomponenten zusammengesetzt sind. Die einzelnen Komponenten müssen jeweils im Kontaktbereich fügeverbunden werden, was besonders aufwändig ist, da eine Vielzahl von Fügeverbindungen erstellt werden müssen, die zudem eine hohe Dichtigkeit aufweisen müssen.

Wird das Gehäuse beispielsweise aus Stahl hergestellt, besteht zusätzlich die Gefahr von Korrosion. Solche Gehäuse können zum Schutz vor Korrosion mit einer Korrosionsschutzschicht beschichtet sein, z.B. einem Lack. Jedoch kann es aufgrund der sogenannten Kantenflucht im Bereich der Kanten trotz einer Beschichtung des Gehäuses zu Korrosion kommen und das Gehäuse beschädigt werden. Dadurch weist das Gehäuse eine geringere Haltbarkeit und Stabilität. Es kann zum Eintritt von Verunreinigung und Flüssigkeit kommen. Außerdem weist das Gehäuse dann keine ausreichende Festigkeit zum Schutz der Akkumulatoren auf.

Die Aufgabe der Erfindung liegt somit darin, ein besonders steifes und stabiles Gehäuse zur Aufnahme von Akkumulatoren zu schaffen, welches zudem kostengünstig herstellbar ist und auch eine ausreichende Dichtigkeit aufweist, sowie eine platzsparende Anordnung der Akkumulatoren in dem Gehäuse ermöglicht.

Zur Lösung der Aufgabe schlägt die Erfindung vor, dass ein schmaler Saumbereich entgegengerichtet umgeschlagen ist, sodass eine Doppellage gebildet ist, und dass der freiliegende obere Saumbereich der Doppellage mit dem Deckel dicht verbunden ist, wobei die Schnittkante des Saumbereichs innerhalb des abgedichteten Gehäusebereichs liegt.

Dadurch, dass das Gehäuse ein abgekantetes Blechbauteil ist, ist es möglich ein quaderförmiges Gehäuse mit besonders geringen Kantenradien zu erstellen. Gleichzeitig sind die Seitenwandungen rechtwinklig zur Bodenwandung ausgerichtet. Dadurch ist eine platzsparende, den Gehäuseraum passend füllende Anordnung der Akkumulatoren in dem Gehäuse ermöglicht.

Die freien Enden der Seitenwände sind nach außen, vom Gehäuseinneren weggerichtet, abgekantet und bilden einen Saum, wobei ein schmaler Saumbereich in entgegengesetzter Richtung, zum Gehäuseinneren hin, umgeschlagen ist und einen oberen Saumbereich bildet. Dadurch ist eine Doppellage gebildet, durch die der Randbereich des Gehäuses verstärkt ist und das Gehäuse besonders steift und stabil ist.

Der obere Saumbereich ist dicht mit dem Deckel verbunden, sodass ein Eintritt von Flüssigkeit oder Verschmutzungen in das Gehäuseinnere verhindert ist.

Die freien Enden der Seitenflächen weisen Schnittkanten auf, die beim Zuschneiden der für das Gehäuse verwendeten Blechtafel entstehen. Die freien Enden der Seitenwandungen sind zu einer Doppellage umgeschlagen, wobei die Schnittkante des Saumbereichs, bzw. die Schnittkante der jeweiligen Seitenwandung aus Blech, zum Gehäuseinneren hin umgeschlagen ist und in dem durch den Deckel und den oberen Saumbereich abgedichteten Bereich des Gehäuses angeordnet ist. Dadurch kann eine Korrosion der Schnittkanten verhindert werden, auch dann, wenn das Gehäuse beispielsweise ein mit einer Korrosionsschutzschicht beschichtetes Stahlgehäuse ist und die Schnittkante aufgrund einer Kantenflucht korrosionsgefährdet ist, da die Schnittkante im abgedichteten Bereich vor äußeren Einflüssen wie beispielsweise Feuchtigkeit geschützt ist. Die außerhalb des abgedichteten Bereichs liegende Kante der Doppellage bildet durch den Umschlag eine abgerundete Kante, wodurch der Kantenradius vergrößert und die Kantenflucht verhindert ist, sodass dieser Bereich korrosionsgeschützt ist.

Dabei ist bevorzugt vorgesehen, dass der freiliegende obere Saumbereich der Doppellage eine Auflage für eine Dichtung bildet, die zwischen diesem Saumbereich und dem Deckel angeordnet ist, wobei die Schnittkante des Saumbereichs innerhalb des Gehäusebereichs liegt, der durch die Dichtung samt Deckel abgedichtet ist.

Durch eine Dichtung, die zwischen dem oberen Saumbereich, also dem entgegengerichtet umgeschlagenen Teil der Doppellage, und dem Deckel angeordnet ist, ist das Gehäuse besonders gut abgedichtet, sodass ein Eintritt von Feuchtigkeit, Flüssigkeit oder Verunreinigungen in das Gehäuse verhindert ist.

Vorzugsweise ist vorgesehen, dass die Doppellagen in Eckbereichen einen Schrägschnitt nach Art eines Gehrungsschnittes aufweisen und mit Schrägkanten aneinanderliegend dicht gefügt sind.

Die Doppellagen der Seitenwände stoßen in Eckbereichen nahe den Eckbereichen des Gehäuses aneinander und sind in diesem Eckbereich dicht gefügt. Dabei sind die Doppellagen jeweils durch den oberen Saumbereich und einen unteren Saumbereich gebildet, wobei die Doppellagen bzw. die Saumbereiche jeweils in den Eckbereichen Schrägschnitte aufweisen. Durch die Schrägschnitte ist es möglich, die Schrägkanten der Doppellage, bzw. der jeweils oben nebeneinander liegenden Saumbereiche und der jeweils unten nebeneinander liegenden Saumbereiche, dicht aneinander zu legen und zu fügen, ohne dass sich diese überlappen. Dadurch kann eine saubere und hochwertige Fügeverbindung hergestellt werden. Außerdem ist die Oberfläche der Doppellagen besonders eben und glatt, sodass Teile des Deckels und/oder eine auf dem oberen Saumbereich angeordnete Dichtung gleichmäßig an der Oberfläche anliegt und das Gehäuseinnere optimal abgedichtet ist. Zum Fügen der Schrägkanten kann beispielsweise das Laserschweißen angewendet werden.

Auf diese Weise ist eine fluiddichte Verbindung zwischen den oberen Saumbereichen und zwischen den unteren Saumbereichen und somit im Eckbereich der Doppellagen gegeben, sodass auch durch den Eckbereich der Doppellagen keine Flüssigkeit in das Gehäuse eindringen kann.

Bevorzugt ist dabei vorgesehen, dass der obere Saumbereich der Doppellage jeweils einen Schrägschnitt mit einer gerade verlaufenden Schrägkante aufweist, wobei vorzugsweise vorgesehen ist, dass ein unterer Saumbereich der Doppellage jeweils einen Schrägschnitt mit einer Schrägkante aufweist, wobei im Verlauf der jeweiligen Schrägkanten mindestens eine Formschlusskontur angeordnet ist, sodass die unteren jeweils nebeneinander liegenden Schrägkanten der unteren Saumbereiche miteinander formschlüssig verhakt sind.

Die Seitenwandungen sind von der Bodenwandung abgekantet und werden in den Eckbereichen des Gehäuses fügeverbunden. Ebenso werden die Eckbereiche benachbarter Doppellagen fügeverbunden.

Um in diesen Bereichen jeweils eine Fügeverbindung mit einer besonders guten Qualität herstellen zu können, ist es notwendig, die Spalte zwischen den zu verbindenden Teilen gering zu halten. Die unten jeweils nebeneinander liegenden Schrägkanten der unteren Saumbereiche werden ineinander verhakt, bevor die Seitenwandungen und/oder die Eckbereiche der Doppellagen fügeverbunden werden. Die unteren Saumbereiche weisen dazu eine Schrägkante mit mindestens einer Formkontur auf. Durch verhaken der Formschlusskontur sind die Seitenwandungen und die Doppellagen zum Verbinden der Seitenwandungen und der Eckbereiche der Doppellagen positionsgehalten, wobei deren zu verbindende Randkanten und/oder Schnittkanten eng benachbart gehalten sind und nur ein geringer Spalt verbleibt. Anschließend werden die Seitenwandungen bzw. die Eckbereiche der Doppellage fügeverbunden, wobei durch den geringen Spalt eine Fügeverbindung in einer besonders guten Qualität hergestellt ist. Insbesondere beim Laserschweißen ist es notwendig, dass zwischen den zu verbindenden Teilen ein besonders geringer Abstandsspalt vorgesehen ist.

Die gerade verlaufenden Schrägkanten des oberen Saumbereichs können dicht aneinander gelegt werden und gefügt werden, ohne dass sich diese überlappen. Dadurch kann eine saubere und hochwertige Fügeverbindung hergestellt werden.

Es ist bevorzugt vorgesehen, dass mindestens die Seitenwandungen in den Eckbereichen aneinanderliegend dicht gefügt sind, vorzugsweise durch Laserschweißen.

In den Eckbereichen des Gehäuses liegen jeweils zwei benachbarte Seitenwandungen aneinander und sind dicht fügeverbunden, vorzugsweise durch Laserschweißen. Vorzugsweise sind auch die Doppellagen mit deren in den Eckbereichen jeweils nebeneinander angeordneten oberen und unteren Saumbereichen dicht gefügt.

Dadurch ist das Gehäuse besonders dicht und es können weder Flüssigkeiten noch Verschmutzungen über die Eckbereiche bzw. der Doppellagen in das Gehäuse eindringen.

Vorzugsweise ist vorgesehen, dass der Deckel mit einem Randbereich lösbar an der Doppellage fixiert ist, wobei bevorzugt vorgesehen ist, dass der Deckel ein Blechbauteil mit einem nach innen umgeschlagenen doppellagigen Randbereich ist, mit dem der Deckel an der Doppellage der Seitenwände mindestens aufliegt, wobei die Dichtung zwischen dem oberen Saumbereich der Doppellage und dem umgeschlagenen Randbereich des Deckels angeordnet ist und die Schnittkanten des umgeschlagenen Randbereichs des Deckels innerhalb des Gehäusebereichs liegen, der durch die Dichtung samt Deckel abgedichtet ist.

Dadurch, dass der Randbereich nach innen, zum Gehäuseinneren hin, umgeschlagen ist und die Schnittkante des Blechdeckels in dem abgedichteten Gehäusebereich liegt, ergibt sich der Vorteil, dass die Randkante des Deckels vor einer Korrosion geschützt ist und zwar auch dann, wenn der Deckel beispielsweise mit einer Korrosionsschutzschicht beschichtet ist und die Randkante aufgrund von Kantenflucht korrosionsgefährdet ist, da die Schnittkante im angedichteten Bereich vor äußeren Einflüssen wie beispielsweise Feuchtigkeit geschützt ist.

Die außerhalb des abgedichteten Bereichs liegende Kante des Deckels bildet durch den Umschlag eine abgerundete Kante, wodurch der Kantenradius vergrößert und die Kantenflucht verhindert ist, sodass dieser Bereich korrosionsgeschützt ist.

Ein Ausführungsbeispiel des erfindungsgemäßen Gehäuses ist in den Figuren gezeigt und nachfolgend näher erläutert.

Es zeigt:
- Fig. 1: ein erfindungsgemäßes Gehäuse in Ansicht;
- Fig. 2: das Gehäuse in einer Ansicht von unten und das Detail A des Gehäuses;
- Fig. 3: zwei Ausschnitte eines Gehäuses in Seitenansicht im Querschnitt.

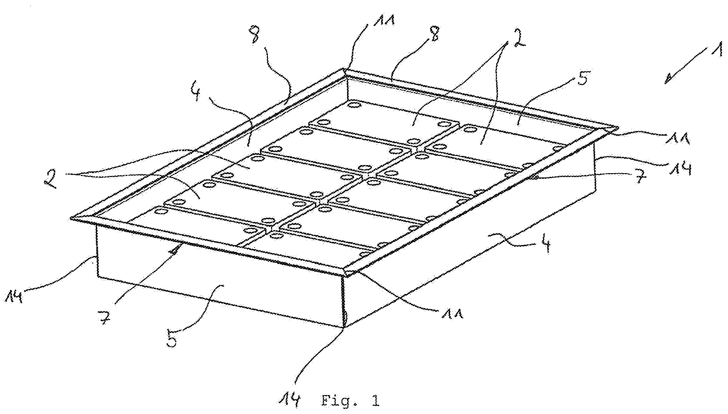

Fig. 1 zeigt ein Gehäuse 1 mit einer quaderartigen Form zur Aufnahme einer Vielzahl von Akkumulatoren 2, die als Energiequelle für den Fahrantrieb von Kraftfahrzeugen, insbesondere Automobilen, bestimmt sind, wobei das Gehäuse 1 eine Bodenwandung 3, damit verbundene umlaufende erste und zweite Seitenwandungen 4,5 und einen mit den freien Enden der Seitenwandungen 4,5 lösbar verbundenen Deckel 6 aufweist. Der Deckel 6 ist in Fig. 1 nicht dargestellt.

Das Gehäuse 1 ist ein aus einer Blechtafel abgekantetes Blechbauteil, wobei die Seitenwandungen 4,5 gleichgerichtet von der Bodenwandung 3 rechtwinklig abgekantet sind. Dadurch ist es möglich ein quaderförmiges Gehäuse 1 mit besonders geringen Kantenradien zu erstellen und es ist eine platzsparende Anordnung der Akkumulatoren 2 in dem Gehäuse 1 ermöglicht.

Die freien Enden der Seitenwandungen 4,5 sind rechtwinklig nach außen, vom Gehäuseinneren weggerichtet, abgekantet und bilden einen Saum. Ein schmaler Saumbereich ist entgegengerichtet, zum Gehäuseinneren hin, umgeschlagen, sodass eine Doppellage 7 gebildet ist. Durch die Doppellage 7 im Randbereich des Gehäuses 1 wird dieses verstärkt und versteift.

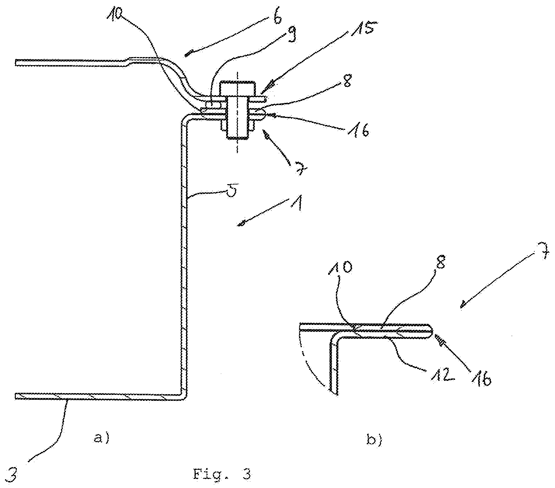

Die freien Enden der Seitenflächen 4,5 weisen Schnittkanten 10 auf, die beim Zuschneiden der für das Gehäuse 1 verwendeten Blechtafel entstehen. Eine Schnittkante 10 ist in Fig. 3 a) dargestellt und in Fig. 3 b) vergrößert gezeigt. Die Schnittkanten 10 des Saumbereichs liegen innerhalb eines Gehäusebereichs, der durch eine Dichtung 9 samt Deckel 6 abgedichtet ist, was in Fig. 3 a) gezeigt ist. Die Schnittkanten 10 sind somit korrosionsgeschützt angeordnet, da diese in dem abgedichteten Bereich vor äußeren Einflüssen, wie beispielsweise Flüssigkeit und Schmutz, geschützt sind. Die Anordnung der Schnittkanten 10 in dem abgedichteten Bereich ist insbesondere auch vorteilhaft für mit einer Korrosionsschutzschicht, beispielsweise einem Schutzlack, beschichtete Gehäuse 1 aus Stahl, da die Schnittkanten 10 trotz der Beschichtung aufgrund der sog. Kantenflucht (Lackflucht) korrosionsgefährdet sind. Die außerhalb des abgedichteten Bereichs liegende Kante 16 der Doppellage 7 bildet durch den Umschlag eine abgerundete Kante 16, wodurch der Kantenradius vergrößert und eine Kantenflucht verhindert ist, sodass dieser Bereich nicht korrosionsgefährdet ist.

Abgedichtet ist das Gehäuse 1 durch eine Dichtung 9 und einen Deckel 6, wie es in der Fig. 3 gezeigt ist. Der freiliegende obere Saumbereich 8 der Doppellage 7 bildet dabei eine Auflage für die Dichtung 9, die zwischen dem oberen Saumbereich 8, also dem zum Gehäuseinneren umgeschlagenen Teil der Doppellage 7, und dem Deckel 6 angeordnet ist. Dadurch ist der Eintritt von Feuchtigkeit, Wasser und Verunreinigungen in das Gehäuse 1 verhindert.

Die von der Bodenwandung abgekanteten Seitenwandungen 4,5 werden in den Eckbereichen 14 des Gehäuses 1 aneinanderliegend dicht fügeverbunden.

Ebenso werden die Eckbereiche benachbarter Doppellagen 7 fügeverbunden. Die Doppellagen 7 sind jeweils aus einem oberen Saumbereich 8 und einen unteren Saumbereich 12 gebildet, wobei die Doppellagen 7 bzw. die jeweils oben nebeneinander liegenden Saumbereiche 8 und die jeweils unten nebeneinander liegenden Saumbereiche 12 in Eckbereichen, die sich nahe den Eckbereichen 14 des Gehäuses 1 befinden, einen Schrägschnitt nach Art eines Gehrungsschnittes aufweisen, der es ermöglicht, die Doppellagen 7 bzw. die jeweiligen Saumbereiche 8 und 12 mit eng aneinanderliegenden Schrägkanten 11,11` dicht zu fügen.

Dadurch ist das Gehäuse 1 besonders dicht und es können weder Flüssigkeiten noch Verschmutzungen über die Eckbereiche 14 oder die Eckbereiche benachbarter Doppellagen 7 in das Gehäuse 1 eindringen. Zum Fügen der Teile wird vorzugsweise das Laserschweißen angewendet.

Um in den Fügebereichen jeweils eine Fügeverbindung mit einer besonders guten Qualität herstellen zu können, ist es notwendig, die Spalte zwischen den zu verbindenden Teilen gering zu halten.

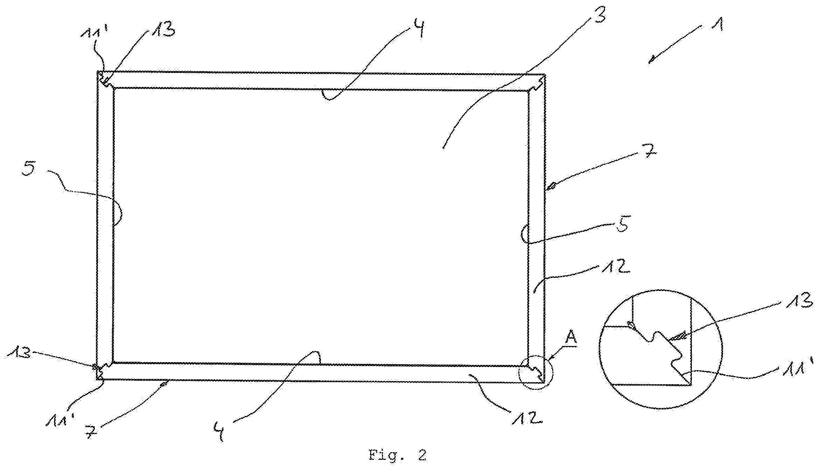

Dazu weist der untere Saumbereich 12 der Doppellage 7 jeweils einen Schrägschnitt mit einer Schrägkante 11` auf, die im Verlauf der jeweiligen Schrägkante 11` eine Formschlusskontur 13 aufweist, mit der die nebeneinanderliegenden unteren Saumbereiche verhakt werden können, bevor die Teile gefügt werden. In Fig. 2 ist die Unterseite des Gehäuses 1 und der untere Saumbereich 12 gezeigt, wobei die Schrägkanten 11` mit den Formkonturen 13 dargestellt und im Detail A der Fig. 2 vergrößert gezeigt sind.

Der obere Saumbereich 8 der Doppellage 7 weist hingegen jeweils einen Schrägschnitt mit einer gerade verlaufenden Schrägkante 11 auf, wobei die gerade verlaufenden Schrägkanten 11 des oberen Saumbereichs 8 dicht aneinander gelegt und gefügt werden können, ohne dass sich diese überlappen. Dadurch kann eine saubere und hochwertige Fügeverbindung hergestellt werden.

Die unten jeweils nebeneinander liegenden Schrägkanten 11` der unteren Saumbereiche 12 werden mit den Formschlusskonturen 13 ineinander verhakt, bevor die Seitenwandungen 4,5 und die Eckbereiche der Doppellagen 7 fügeverbunden werden. Durch verhaken der Formschlusskonturen 13 sind die Seitenwandungen 4,5 und die Doppellagen 7 zum Verbinden der Seitenwandungen 4,5 und der Eckbereiche der Doppellagen 7 positionsgehalten, wobei deren zu verbindende Randkanten und/oder Schnittkanten eng benachbart gehalten sind und nur ein geringer Spalt verbleibt.

Anschließend werden die Seitenwandungen 4,5 bzw. die Eckbereiche der Doppellage 7 fügeverbunden, wobei durch den geringen Spalt eine Fügeverbindung in einer besonders guten Qualität hergestellt ist. Insbesondere beim Laserschweißen ist es notwendig, dass zwischen den zu verbindenden Teilen ein besonders geringer Abstandsspalt vorgesehen ist.

Der Deckel 6 ist mit einem Randbereich 15 lösbar an der Doppellage 7 fixiert, wobei als Verbindungsmittel beispielsweise eine Schraubverbindung, wie sie in Fig. 3 gezeigt ist, verwendet werden kann.

Eine nicht dargestellte Ausführungsform umfasst einen Deckel 6, der ein Blechbauteil mit einem nach innen umgeschlagenen doppellagigen Randbereich ist, mit dem der Deckel 6 an der Doppellage 7 der Seitenwände 4,5 mindestens aufliegt, wobei die Dichtung 9 zwischen dem oberen Saumbereich 8 der Doppellage 7 und dem umgeschlagenen Randbereich des Deckels 6 angeordnet ist und die Schnittkanten des umgeschlagenen Randbereichs des Deckels 6 innerhalb des Gehäusebereichs liegen, der durch die Dichtung 9 samt Deckel 6 abgedichtet ist. Dadurch ist der Deckel 6 im Randbereich 15 verstärkt und versteift. Die Schnittkanten sind in dem abgedichteten Gehäuse vor äußeren Einflüssen wie Feuchtigkeit und Schmutz geschützt, sodass Korrosion der Schnittkanten verhindert ist, auch dann, wenn der Deckel 6 beispielsweise mit einer Korrosionsschutzschicht beschichtet ist und die Randkanten 15 aufgrund von Kantenflucht korrosionsgefährdet sind.

Die außerhalb des abgedichteten Bereichs liegende Kante des Deckels 6 bildet durch den Umschlag eine abgerundete Kante mit einem vergrößerten Kantenradius, sodass eine Kantenflucht verhindert und eine Korrosion nicht zu befürchten ist.

Die Erfindung ist nicht auf das Ausführungsbeispiel beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

## Patentansprüche

1. Gehäuse (1) mit einer quaderartigen Form zur Aufnahme einer Vielzahl von quaderförmigen Akkumulatoren (2), die als Energiequelle für den Fahrantrieb von Kraftfahrzeugen, insbesondere Automobilen, bestimmt sind, wobei das Gehäuse (1) eine Bodenwandung (3), damit verbundene umlaufende erste und zweite Seitenwandungen (4,5) und einen mit den freien Enden der Seitenwandungen (4,5) lösbar verbundenen Deckel (6) aufweist, wobei das Gehäuse (1) ein aus einer Blechtafel abgekantetes Blechbauteil ist, wobei die Seitenwandungen (4,5) gleichgerichtet von der Bodenwandung (3) rechtwinklig abgekantet sind und deren freie Enden rechtwinklig nach außen, vom Gehäuseinneren weggerichtet abgekantet sind, **dadurch gekennzeichnet, dass** ein schmaler Saumbereich entgegengerichtet umgeschlagen ist, sodass eine Doppellage (7) gebildet ist, und dass der freiliegende obere Saumbereich (8) der Doppellage (7) mit dem Deckel (6) dicht verbunden ist, wobei die Schnittkante (10) des Saumbereichs innerhalb des abgedichteten Gehäusebereichs liegt.

2. Gehäuse (1) nach Anspruch 1, **dadurch gekennzeichnet, dass** der freiliegende obere Saumbereich (8) der Doppellage (7) eine Auflage für eine Dichtung (9) bildet, die zwischen diesem Saumbereich (8) und dem Deckel (6) angeordnet ist, wobei die Schnittkante (10) des Saumbereichs innerhalb des Gehäusebereichs liegt, der durch die Dichtung (9) samt Deckel (6) abgedichtet ist.

3. Gehäuse (1) nach Anspruch 1 oder 2, **dadurch gekennzeichnet, dass** die Doppellagen (7) in Eckbereichen einen Schrägschnitt nach Art eines Gehrungsschnittes aufweisen und mit Schrägkanten (11,11') aneinanderliegend dicht gefügt sind.

4. Gehäuse nach Anspruch 3, **dadurch gekennzeichnet, dass** der obere Saumbereich (8) der Doppellage (7) jeweils einen Schrägschnitt mit einer gerade verlaufenden Schrägkante (11) aufweist.

5. Gehäuse nach Anspruch 3 oder 4, **dadurch gekennzeichnet, dass** ein unterer Saumbereich (12) der Doppellage (7) jeweils einen Schrägschnitt mit einer Schrägkante (11`) aufweist, wobei im Verlauf der jeweiligen Schrägkanten (11') mindestens eine Formschlusskontur (13) angeordnet ist, sodass die unteren jeweils nebeneinander liegenden Schrägkanten (11') der unteren Saumbereiche (12) miteinander formschlüssig verhakt sind.

6. Gehäuse (1) nach einem der Ansprüche 1 bis 5, **dadurch gekennzeichnet, dass** mindestens die Seitenwandungen (4,5) in den Eckbereichen (14) aneinanderliegend dicht gefügt sind, vorzugsweise durch Laserschweißen.

7. Gehäuse nach einem der Ansprüche 1 bis 6, **dadurch gekennzeichnet, dass** der Deckel (6) mit einem Randbereich (15) lösbar an der Doppellage (7) fixiert ist.

8. Gehäuse (1) nach einem der Ansprüche 2 bis 7, **dadurch gekennzeichnet, dass** der Deckel (6) ein Blechbauteil mit einem nach innen umgeschlagenen doppellagigen Randbereich ist, mit dem der Deckel (6) an der Doppellage (7) der Seitenwände (4,5) mindestens aufliegt, wobei die Dichtung (9) zwischen dem oberen Saumbereich (8) der Doppellage (7) und dem umgeschlagenen Randbereich des Deckels (6) angeordnet ist und die Schnittkanten des umgeschlagenen Randbereichs des Deckels (6) innerhalb des Gehäusebereichs liegen, der durch die Dichtung (9) samt Deckel (6) abgedichtet ist.

## Claims

1. A cuboid-shaped housing (1) for accommodating a plurality of cuboid-shaped accumulators (2), which are intended as an energy source for the traction drive of motor vehicles, in particular automobiles, the housing (1) having a base wall (3), first and second circumferential side walls (4, 5) connected thereto and a cover (6) releasably connected to the free ends of the side walls (4, 5), the housing (1) being a sheet metal component bent from a sheet metal plate, the side walls (4, 5) being bent at right angles in the same direction from the base wall (3) and their free ends being bent at right angles outwards, directed away from the housing interior, **characterized by that** a narrow seam region is folded over in the opposite direction so that a double layer (7) is formed, and that the exposed upper seam region (8) of the double layer (7) is tightly connected to the cover (6), the cut edge (10) of the seam region lying within the sealed housing region.

2. The housing (1) of claim 1, **characterized by that** the exposed upper seam region (8) of the double layer (7) forms a support for a seal (9), which is arranged between this seam region (8) and the cover (6), the cut edge (10) of the seam region lying within the housing region, which is sealed by the seal (9) together with the cover (6).

3. The housing (1) of claim 1 or 2, **characterized by that** the double layers (7) have a oblique cut in the corner regions in the manner of a miter cut and are tightly joined together with beveled edges (11, 11').

4. The housing of claim 3, **characterized by that** the upper seam region (8) of the double layer (7) has an oblique cut with a straight beveled edge (11).

5. The housing of claim 3 or 4, **characterized by that** a lower seam region (12) of the double layer (7) has an oblique cut with an oblique edge (11'), at least one form-fitting contour (13) being arranged in the course of the respective oblique edges (11'), so that the lower oblique edges (11') of the lower seam regions (12), which are in each case adjacent to one another, are interlocked with one another in a form-fitting manner.

6. The housing (1) of one of claims 1 to 5, **characterized by that** at least the side walls (4, 5) are tightly joined to one another in the corner regions (14), preferably by laser welding.

7. The housing of one of claims 1 to 6, **characterized by that** the cover (6) is detachably fixed to the double layer (7) with an edge region (15).

8. The housing (1) of one of claims 2 to 7, **characterized by that** the cover (6) is a sheet metal component with an inwardly folded-over double-layered edge region, with which the cover (6) rests at least on the double layer (7) of the side walls (4, 5), the seal (9) being arranged between the upper seam region (8) of the double layer (7) and the folded-over edge region of the cover (6) and the cut edges of the folded-over edge region of the cover (6) lying within the housing region, which is sealed by the seal (9) together with the cover (6).

## Revendications

1. Boîtier (1) de forme cuboïde pour recevoir une pluralité d'accumulateurs (2) de forme cuboïde, destinés à servir de source d'énergie pour la propulsion de véhicules motorisés, en particulier véhicules automobiles, le boîtier (1) présentant une paroi de fond (3), des première et deuxième parois latérales (4, 5) périphériques reliées à celle-ci et un couvercle (6) relié de manière amovible aux extrémités libres des parois latérales (4, 5), le boîtier (1) étant un élément de construction en tôle plié à partir d'une feuille de tôle, les parois latérales (4, 5) étant pliées à angle droit dans le même sens que la paroi de fond (3) et leurs extrémités libres étant pliées à angle droit vers l'extérieur, en s'éloignant de l'intérieur du boîtier, **caractérisé en ce qu'**une zone d'ourlet étroite est rabattue dans le sens opposé, de sorte qu'une double couche (7) soit formée, et **en ce que** la zone d'ourlet supérieure (8) exposée de la double couche (7) est reliée de manière étanche au couvercle (6), l'arête de coupe (10) de la zone d'ourlet se trouvant à l'intérieur de la zone de boîtier étanchéifiée.

2. Boîtier (1) selon la revendication 1, **caractérisé en ce que** la zone d'ourlet supérieure exposée (8) de la double couche (7) forme un support pour un joint d'étanchéité (9) qui est disposé entre cette zone d'ourlet (8) et le couvercle (6), l'arête de coupe (10) de la zone d'ourlet étant située à l'intérieur de la zone de boîtier qui est rendue étanche par le joint (9) avec le couvercle (6).

3. Boîtier (1) selon la revendication 1 ou 2, **caractérisé en ce que** les doubles couches (7) présentent dans les zones d'angle une coupe oblique à la manière d'une coupe en onglet et sont assemblées de manière étanche les unes aux autres par des arêtes obliques (11, 11').

4. Boîtier selon la revendication 3, **caractérisé en ce que** la zone d'ourlet supérieure (8) de la double couche (7) présente une coupe oblique avec une arête oblique (11) s'étendant en ligne droite.

5. Boîtier selon la revendication 3 ou 4, **caractérisé en ce qu'**une zone d'ourlet inférieure (12) de la double couche (7) présente une coupe oblique avec une arête oblique (11'), au moins un contour à engagement positif (13) étant disposé sur le tracé des arêtes obliques respectives (11'), de sorte que les arêtes obliques inférieures (11') respectivement juxtaposées des zones d'ourlet inférieures (12) soient accrochées les unes aux autres par engagement positif.

6. Boîtier (1) selon une des revendications 1 à 5, **caractérisé en ce qu'**au moins les parois latérales (4, 5) sont assemblées de manière étanche l'une à l'autre dans les zones de coin (14), de préférence par soudage au laser.

7. Boîtier selon une des revendications 1 à 6, **caractérisé en ce que** le couvercle (6) est fixé de manière amovible à la double couche (7) par une zone de bord (15).

8. Boîtier (1) selon une des revendications 2 à 7, **caractérisé en ce que** le couvercle (6) est un composant en tôle avec une zone de bord à double couche rabattue vers l'intérieur, avec laquelle le couvercle (6) repose au moins sur la double couche (7) des parois latérales (4, 5), le joint (9) étant disposé entre la zone d'ourlet supérieure (8) de la double couche (7) et la zone de bordure rabattue du couvercle (6) et les arêtes de coupe de la zone de bordure rabattue du couvercle (6) se trouvant à l'intérieur de la zone de boîtier, qui est rendue étanche par le joint (9) avec le couvercle (6).
